# EUROPEAN PATENT APPLICATION

(11) **EP 1 115 168 A1**
(43) Date of publication of application: **11.07.2001**
(21) Application number: 99925415.4
(22) Date of filing: 22.06.1999
(51) Int. Cl.: H01M 6/22, H01M 10/40

(54) **CELL AND METHOD FOR MANUFACTURING THE SAME**

(71) Applicant: MITSUBISHI DENKI KABUSHIKI KAISHA, Tokyo 100-8310 (JP)
(72) Inventor: YOSHIDA, Yasuhiro, Tokyo 100-8310 (JP); HIROI, Osamu, Tokyo 100-8310 (JP); HAMANO, Kouji, Tokyo 100-8310 (JP); TAKEMURA, Daigo, Tokyo 100-8310 (JP); AIHARA, Sigeru, Tokyo 100-8310 (JP); SHIOTA, Hisashi, Tokyo 100-8310 (JP); ARAGANE, Jun, Tokyo 100-8310 (JP); URUSHIBATA, Hiroaki, Tokyo 100-8310 (JP); MURAI, Michio, Tokyo 100-8310 (JP); INUZUKA, Takayuki, Tokyo 100-8310 (JP)
(74) Representative: Sajda, Wolf E., Dipl.-Phys.
(86) International application number: JP9903320
(87) International publication number: WO0079624

(57) **Abstract**

As to the batteries containing an organic low molecular compound in the space between the positive and negative electrodes, there has been a risk of unusual conditions such as ignition because the organic low molecular compound in liquid was released from the above space to the outside, when there was heating of the battery and the like.
The battery of the present invention has been carried out to solve the above problem. The absorbent material (4) which absorbs the organic low molecular compound is disposed in the neighbor of a battery body comprising a positive electrode (1), a negative electrode (2), and an ion conductive layer (3) interposed between the both electrodes which is filled with an electrolyte containing an organic low molecular compound, and the above battery body and the above absorbent material (4) are stored in a package (5).

## Description

### TECHNICAL FIELD

The present invention relates to a battery and a process for preparing the same. More particularly, the present invention relates to a battery construction which can impart high safety to a battery containing non-aqueous electrolyte and a process for preparing the above battery.

### BACKGROUND ART

There is a growing demand for downsizing and lightening of portable electric appliances and the achievement greatly depends upon improvement of battery performance. Various batteries have been developed and improved in order to meet the demand. Performance required to a battery includes high voltage, high energy density, safety, variety of shape and the like. A lithium ion battery is a non-aqueous electrolytic solution battery, which is expected to achieve high voltage and high energy density, and active improvement is going on even at present. Also, there has been carried out research for lithium metal batteries, which are expected to have further higher energy density.

These non-aqueous batteries comprise a positive electrode, a negative electrode and an ion conductive layer interposed between the both electrodes as major components. In lithium ion batteries practically used these days, material in a shape of a plate obtained by applying powder such as lithium cobalt oxide to a current collector is used as an active material for the positive electrode. In the same manner, material in a shape of a plate obtained by applying powder such as carbon material to a current collector is used as an active material for the negative electrode. Normally, the ion conductive layer is filled with an organic liquid electrolyte and the liquid electrolyte contains an organic low molecular compound. Therefore, it was easy to evaporate and was highly inflammable, and occurrence of accident such as ignition was highly possible under unusual circumstance such as short-circuit of the battery. This is not originated in the liquid electrolyte which is present between the electrode active materials or present in minute space created by the positive and negative electrodes. What matters in this case is the electrolytic component released outside. In order to solve the above problems caused by the liquid electrolyte, gelation of the electrolyte is investigated as disclosed in USP 5,460,904 and the like. It is thought that the liquid electrolyte loses fluidity and gains safety by gelation thereof. However, even if the gelled electrolyte was used, there was a disadvantage for safety that the liquid component still leaked out from the gelled electrolyte when the battery was heated.

The present invention has been carried out in order to solve the above problems. The object of the present invention is to provide a highly safe battery by making it possible to remove a liquid component which is released into the battery package.

### DISCLOSURE OF INVENTION

The first battery of the present invention comprises a positive electrode, a negative electrode, a battery body comprising an ion conductive layer filled with an electrolyte containing an organic low molecular compound, an absorbent material which absorbs the above organic low molecular compound positioned in the neighbor of the above battery body, and a package storing the above battery body and the above absorbent material.

According to this, since it is possible to remove liquid component released into the battery package, there is an effect that a highly safe battery can be prepared.

The second battery of the present invention is that in the first battery, the absorbent material which absorbs the organic low molecular compound comprises a material which turns into gel by absorbing the organic low molecular compound.

According to this, since the liquid electrolyte released inside the battery package becomes gelled to lose fluidity, there is an effect that a highly safe battery can be prepared.

The third battery of the present invention is that in the first battery, the absorbent material which absorbs the organic low molecular compound comprises a material which absorbs the organic low molecular composition by heating.

According to this, since it is possible to remove the liquid component released inside the battery package at heating, there is an effect that a highly safe battery can be prepared.

The fourth battery of the present invention is that in the third battery, the absorbent material which absorbs the organic low molecular compound is coated with a material which inhibits permeation of the organic low molecular compound and the above inhibition disappears by heating.

According to this, it is possible to prevent the contact between the material which absorbs the organic low molecular compound and the electrolytic solution at about a room temperature, and to absorb the organic low molecular compound which is released only when heat is generated due to unusual conditions. Therefore, there is an effect that a highly safe battery can be prepared without affecting battery characteristics.

The first process for preparing the battery of the present invention comprises the steps of:
(a) forming a battery body comprising a positive electrode, a negative electrode and an ion conductive layer interposed between the both electrodes which is filled with an electrolyte containing an organic low molecular compound;
(b) disposing a material which absorbs the above organic low molecular compound by heating in the neighbor of the above battery body and storing the above battery body and the absorbent material within the package; and
(c) sealing the above package and heating the above whole package to a pre-determined temperature.

According to this, since the electrolytic solution left inside the package can be absorbed at sealing, there is an effect that a highly safe battery can be prepared.

### BRIEF DESCRIPTION OF DRAWING

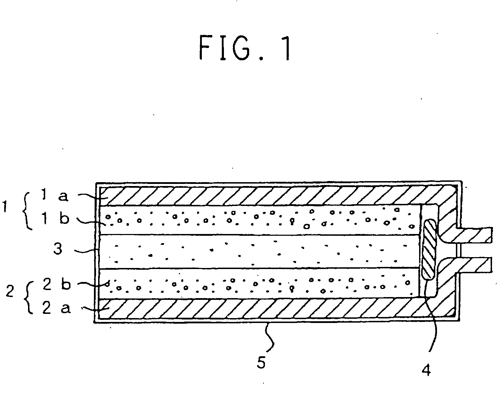

Fig. 1 is a cross sectional view showing construction of a battery according to one embodiment of the present invention.

### BEST MODE FOR CARRYING OUT THE INVENTION

Fig. 1 is a cross sectional view showing of a battery according to one embodiment of the present invention. In the figure, numeral 1 indicates a positive electrode having a positive electrode active material layer 1b formed on the surface of the positive electrode current collector la, numeral 2 indicates a negative electrode having a negative electrode active material layer 2b formed on the surface of the negative electrode current collector 2a, and numeral 3 indicates an ion conductive layer provided between the positive electrode 1 and the negative electrode 2. The above ion conductive layer 3 is filled with an electrolyte containing an organic low molecular compound, and a battery body is constructed by the above positive electrode 1, the negative electrode 2 and the ion conductive layer 3. Numeral 4 indicates an absorbent material which absorbs the organic low molecular compound disposed in the neighbor of the above battery body. Numeral 5 indicates a package storing the above battery body and absorbent material 1.

In the battery of the present invention, there can be used the electrodes formed by applying the active material layer on the current collector. As the active material in the positive electrode 1, it is possible to use an oxide of transition metal such as cobalt, manganese or nickel; a chalcogen compound; a composite compound thereof; a material containing various additional elements without limitation. In the negative electrode 2, carbon material can be preferably used, but in the battery of the present invention the carbon material can be used regardless of its chemical properties. These active materials are used in a shape of particles. An available particle size is 0.3 to 20 µm. In particular, it is preferably 1 to 5 µm. If the particle size is too small, a covering area of the active material surface covered with an adhesive agent at jointing becomes too large to achieve effective dope and dedope of lithium ion at charge and discharge, which leads to lowering of the battery properties. If the particle size is too large, it is not preferable because a thin film cannot be easily prepared, and not only filling density is decreased but also unevenness of the surface of the electrode plate becomes larger to prevent its sufficiently joint with the separator.

As the current collector, any material stable in the battery can be used. Aluminum is preferable for the positive electrode 1, while copper is preferable for the negative electrode 2. Any shape is available for the current collector such as foil, mesh or expanded metal.

Construction of the battery may be such that the positive electrode 1 lies adjacent to the negative electrode 2 and the electrolyte is filled in the space to form the ion conductive layer 3. The construction may be lamination of plane material, winding construction, or folded construction or composite construction thereof.

The above electrolyte may be liquid or gel. The electrolyte contains, as an organic low molecular compound, a single or mixed solvent of an ether solvent such as dimethoxyethane or diethyl ether, or of an ester solvent such as ethylene carbonate or propylene carbonate. Further, other additives may be contained therein. As a salt contained in the electrolyte, LiPF₆, LiClO₄ and Li-BF₄ are available.

When the above electrolyte is used in gel form, there is no particular limitation for gellation process and gellation material. But the gel is formed by containing an electrolytic solution in a polymer component and a content of the electrolytic solution is preferably 20 to 98 % by weight. If the electrolytic solution content is at most 20 % by weight, the ion conductivity of the gel itself becomes too low to achieve sufficient ion conductivity to the electrolytic layer when a battery is formed. If the electrolytic solution content is at least 98 % by weight, strength of the gel becomes extremely low, and forming a gel is of little effect. There is no particular limitation for the polymer component. Examples thereof are a resin of a polymer comprising a monomer such as a methacrylic acid or an acrylic acid or a monomer such as alkylene oxide, acrylonitrile, ethylene, styrene, vinyl alcohol or vinyl pyrolidone at the main chain, and a resin of a homopolymer or copolymer of vinylidene fluoride.

In case of using a liquid electrolyte, a separator is necessary. The separator may also be used even though there is a case where a battery functions without the separator when the electrolyte is gel. The separator is suitably selected among an insulating porous film, a mesh, a non-woven fabric and the like having sufficient strength. It is not particularly limited, but a porous film comprising a thermoplastic resin such as polypropylene or polyethylene is preferable in terms of adhesion and safety.

As the absorbent material 4 which absorbs the organic low molecular compound, there can be used a porous material or a solid containing an organic polymer as a main component.

In case where the porous material is used, the organic low molecular composition released outside the battery body is absorbed into minute holes of the porous material. The substance forming the porous material needs to be non-conductive, insoluble to the electrolytic solution and be easily wet to the electrolytic solution. Examples are an inorganic material such as silica, alumina, titanium oxide or clay, particles of polystyrene, polyolefin, poly(methacrylic acid) and the like, and a powder, a pellet, film or fiber of mixture thereof without any particular limitation. Its wetting property to the electrolytic solution may be improved by treatment with a surfactant if necessary.

In case of using the solid containing an organic polymer as a main component, the released organic low molecular compound is absorbed to the above solid to form gel. There is no particular limitation for the solid polymer, and there can be used a resin of a polymer comprising a monomer such as a methacrylic acid or an acrylic acid or a monomer such as alkylene oxide, acrylonitrile, ethylene, styrene, vinyl alcohol or vinyl pyrolidone at the main chain, and a resin of a homopolymer or copolymer of vinylidene fluoride. In order to improve absorption, it may be possible to add various additives such as a cross-linking agent and a plasticizer.

The absorbent material 4 which absorbs the organic low molecular compound may comprise a material which absorbs the organic low molecular compound by heating. Preferably, an absorption ratio at 25°C is less than 50 % of its material weight, while a rate of absorption of the organic low molecular compound at not less than 60°C is at least five times larger than the rate at 25°C. When the absorption ratio at 25°C becomes at least 50 % based on its material weight, there is a tendency that the effect of absorption of the organic low molecular compound present between the electrodes is extremely increased to affect battery characteristics. If the rate of absorption of the organic low molecular compound at not less than 60°C is five times less than the rate at 25°C, it is impossible to expect a sufficient effect of safety improvement because of insufficient absorption under an exothermic due to unusual conditions. The above materials are not particularly limited, and there can be used a polymer comprising a monomer such as a methacrylic acid and an acrylic acid or a monomer having large polarity such as alkylene oxide, acrylonitrile, vinyl alcohol, vinyl pyrolidone and vinylidene fluoride. Those may also be used after cross-linking by heating or lighting, if necessary.

The absorbent material 4 absorbing the organic low molecular compound may be, for example, the above material (a porous material or a solid comprising an organic polymer as a main component) absorbing the organic low molecular compound, which is coated with a material inhibiting permeation of the organic low molecular compound, and wherein the inhibition disappears by heating. The material inhibiting permeation of the organic low molecular compound contains a substance, which melts or is dissolved in an electrolytic solution at a temperature of at least 60°C. By coating the above material which absorbs the organic low molecular compound therewith, it is possible to prevent contact between the material which absorbs the organic low molecular compound and the electrolytic solution without affecting the battery characteristics at about a room temperature. And it is also possible to absorb the released organic low molecular compound only when heat is generated due to unusual conditions. There is no particular limitation for the material, which melts at a temperature of at least 60°C, and an example is polyolefin such as polyethylene having a low melting point. Also, as the material which is dissolved in the electrolytic solution at a temperature of at least 60°C, examples are poly(vinylidene fluoride), poly(vinyl pyrolidone) and the like. These single polymer or a mixture with the other polymers are used to prepare a capsule storing the material which absorbs the organic low molecular compound. Or the material is liquefied by dissolving in a solvent or the like to coat circumference of the material which absorbs the organic low molecular compound.

The absorbent material 4 absorbing the above organic low molecular compound at heating is disposed in the neighbor of the battery body comprising the positive electrode 1, the negative electrode 2 and the ion conductive layer 3 interposed between the both electrodes. Then, the battery body and the absorbent material are stored in the package 5 and the package 5 is sealed to heat the whole package to a pre-determined temperature. It is possible to absorb the electrolytic solution left inside the package at sealing and thus, a highly safe battery can be prepared.

Also, the battery according to the embodiment of the present invention shown in Fig. 1 is a battery whose battery body is formed as a single lamination of the electrode. A battery comprising a battery body having a plurality of an electrode lamination may also have the same construction as in this embodiment, in which the absorbent material absorbing the organic low molecular compound is disposed in the neighbor of the battery body. As lamination structure of the battery body, examples are structure wherein the positive electrode and the negative electrode are alternatively placed between a plurality of separated separators, structure wherein the positive electrode and the negative electrode are alternatively placed between a wounded belt-like separator, structure wherein the positive electrode and the negative electrode are alternatively placed between a folded belt-like separator and the like.

Hereinafter, more concrete examples of the present invention are illustrated. However, the present invention is not intended to be limited to these examples.

### EXAMPLE 1

### (Process for Preparing Positive Electrode)

A positive electrode 1 was prepared by applying a paste for the positive electrode active material obtained by mixing 87 % by weight of LiCoO₂, 8 % by weight of a graphite powder KS-6 and 5 % by weight of poly(vinylidene fluoride) as a binder resin onto an aluminum foil having a thickness of 20 µm forming the positive electrode current collector la according to Doctor Blade method in a thickness of about 100 µm.

### (Process for Preparing Negative Electrode)

A negative electrode 2 was prepared by applying a paste for the negative electrode active material obtained by mixing 95 % by weight of mesophase microbeads carbon (available from Osaka Gas Co., Ltd.), 5 % by weight of poly(vinylidene fluoride) as a binder onto a copper foil having a thickness of 12 µm forming the negative electrode current collector 2a according to Doctor Blade method in a thickness of about 100 µm.

### (Process for Preparing Battery)

Each of the positive and negative electrodes was cut into a size of 50 mm x 200 mm, and terminals for current collector were attached thereto. The separator 3 cut into a size of 52 mm × 210 mm, was interposed between the positive electrode 1 and the negative electrode 2. It was rolled out in a width of about 5 cm and fixed by using a strip of Kapton tape. Thereafter, the taken electrode was put into cylindrically processed film 5 of aluminum laminated sheet. After sufficient drying, thereto was injected an electrolytic solution containing lithium hexafluorophosphate as an electrolyte with ethylene carbonate and 1,2-dimethoxyethane as a solvent. Further, 0.5 g of pelleted poly(vinyl pyrolidone) which was cross-linked by heating for an hour at 200°C followed by dehydration was introduced in the neighbor of the battery body comprising the positive electrode 1, the negative electrode 2 and the separator 3 constituting the ion conductive layer. And then, the aluminum-laminated film was sealed to prepare a battery.

### (Evaluation of Battery)

As to the characteristics of the prepared battery, energy density per weight was 70 Wh/kg.

In case of heating a battery in charging condition to 120°C, there was no unusual condition. When the sealed aluminum-laminated sheet 5 was opened, it was found that no released liquid was left and that the poly(vinyl pyrolidone) had swelled to form gel.

### EXAMPLE 2

### (Process for Preparing Battery)

The positive and negative electrodes prepared in the same manner as in Example 1 were cut into a size of 50 mm × 200 mm and terminals for current collector were attached thereto. Powder of a copolymer of vinylidene fluoride and hexafluoropropane was applied to the positive electrode 1 and the negative electrode 2. The separator 3 cut into a size of 52 mm × 210 mm was interposed between the positive electrode and the negative electrode, and it was rolled out in a width of about 5 cm and was fixed by using a strip of Kapton tape. Thereafter, the taken electrode was put into cylindrically processed film of aluminum laminated sheet. After sufficient drying, thereto was injected an electrolytic solution containing lithium hexafluorophosphate as an electrolyte with ethylene carbonate and 1,2-dimethoxyethane as a solvent. In this condition, the powder of the copolymer of vinylidene fluoride and hexafluoropropane present on the electrode was dissolved into the electrolytic solution by heating to 60°C, and it was cooled to gelatinize the electrolytic solution. Then, to the neighbor of the battery body comprising the positive electrode 1, the negative electrode 2 and the separator 3 forming the ion conductive layer was added 0.5 g of zeolite powder which was heated at 200°C for 2 hours and dried. And then the aluminum-laminated film 5 was sealed to prepare a battery.

### (Evaluation of Battery)

As to the characteristics of the prepared battery, energy density per weight was 60 Wh/kg.

In case of heating a battery in charging condition to 120 °C, there was no unusual condition. When the sealed aluminum laminated sheet 5 was opened, there was no released liquid.

### EXAMPLE 3

### (Process for Preparing Battery)

Lithium fluoride powder in an amount of 0.5 g, which was heated at 150 °C for 2 hours and dried, was wrapped with a stretched polyethylene film having a thickness of 5 µm. It was used instead of the pelleted poly(vinyl pyrolidone) in Example 1, and the aluminum laminated sheet 5 was sealed to prepare a battery.

### (Evaluation of Battery)

As to the characteristics of the prepared battery, energy density per weight was 70 Wh/kg.

In case of heating a battery in charging condition to 120 °C, there was no unusual condition. When the sealed aluminum laminated sheet 5 was opened, polyethylene film was torn and the contained lithium fluoride powder had absorbed the liquid. Thus, there was no released liquid.

### EXAMPLE 4

Zeolite powder in an amount of 0.5 g which was heated at 200 °C for 2 hours and dried was wrapped with a stretched polyethylene film having a thickness of 5 µm. This was used instead of the pelleted poly(vinyl pyrolidone) in Example 1, and the aluminum laminated sheet 5 was sealed to prepare a battery.

### (Evaluation of Battery)

As to the characteristics of the prepared battery, energy density per weight was 70 Wh/kg.

In case of heating a battery in charging condition to 120 °C, there was no unusual condition. When the sealed aluminum laminated sheet 5 was opened, the polyethylene film was torn and the contained zeolite powder had absorbed the liquid. Thus, there was no released liquid.

### EXAMPLE 5

### (Process for Preparing Battery)

Powder of a copolymer of vinylidene fluoride and hexafluoropropane in an amount of 0.1 g was processed by pressing to have a thickness of 0.5 mm, a width of 5mm and a length of 50 mm. This was used instead of the pelleted poly(vinyl pyrolidone) in Example 1, and the aluminum laminated sheet 5 was sealed and it was heated at 60°C for 2 hours to prepare a battery.

### (Evaluation of Battery)

When the battery was opened after heating, it was found that the electrolytic solution scarcely left inside the aluminum laminated film 5 was absorbed to form gel in the copolymer of vinylidene fluoride and hexafluoropropane by heating at 60°C for 2 hours.

As to the characteristics of the prepared battery, energy density per weight was 67 Wh/kg.

In case of heating a battery in charging condition to 120 °C, there was no unusual condition.

Additionally, the batteries shown in the above examples can be used not only for a lithium ion secondary battery of an organic electrolytic solution type or gel electrolyte type, but also for a primary battery such as a lithium battery or another secondary battery.

Furthermore, it can be used also for a primary and secondary battery whose battery body is a laminated type, a winding type, a folded type, a button type and the like.

### INDUSTRIAL APPLICABILITY

The battery and the process for preparing the same of the present invention can be applied not only to a lithium ion secondary battery of an organic electrolytic solution type and a gel electrolyte type, but also to a primary battery such as a lithium battery or another secondary battery.

Furthermore, these can be applied also to primary and secondary batteries of a laminated type, a winding type, a folded type a button type and the like.

## Claims

1. A battery comprising a positive electrode, a negative electrode, a battery body interposed between the both electrodes comprising an ion conductive layer filled with an electrolyte containing an organic low molecular compound, an absorbent material which absorbs the organic low molecular compound disposed in the neighbor of the battery body, and a package storing the battery body and the absorbent material.

2. A battery according to Claim 1,
wherein the absorbent material which absorbs the organic low molecular compound comprises a material which turns into gel by absorbing the organic low molecular compound.

3. A battery according to Claim 1,
wherein the absorbent material which absorbs the organic low molecular compound comprises a material which absorbs the organic low molecular compound by heating.

4. A battery according to Claim 3,
wherein the absorbent material which absorbs the organic low molecular compound is coated with a material which inhibits permeation of the organic low molecular compound, and
wherein the inhibition disappears by heating.

5. A process for preparing a battery comprising the steps of:
(a) forming a battery body comprising a positive electrode, a negative electrode, and an ion conductive layer interposed between the both electrodes which is filled with an electrolyte containing an organic low molecular compound;
(b) disposing a material which absorbs the organic low molecular compound by heating in the neighbor of the battery body and storing the battery body and the absorbent material within the package; and
(c) sealing the package and heating the whole package to a pre-determined temperature.
